# EUROPEAN PATENT SPECIFICATION

(11) **EP 1 586 202 B1**
(45) Date of publication and mention of the grant of the patent: **18.03.2009**
(21) Application number: 04704415.1
(22) Date of filing: 22.01.2004
(51) Int. Cl.: H04N 7/36

(54) **VIDEO CONTENT PARSER WITH SCENE CHANGE DETECTOR**
VIDEOINHALTPARSER MIT SZENENÄNDERUNGSDETEKTOR
ANALYSEUR VIDEO

(30) Priority: 23.01.2003 US 442412 P
(43) Date of publication of application: 19.10.2005
(73) Proprietor: Intergraph Software Technologies Company, Las Vegas, NV 89119 (US)
(72) Inventor: MCKAY, Therman, Ward, III, Madison, AL 35758 (US); GRINDSTAFF, Gene, Arthur, Decatur, AL 35603 (US); FLETCHER, Susan, Heath, Calvin, Huntsville, AL 35811 (US); WHITAKER, Sheila, G., Gurley, AL 35748 (US)
(74) Representative: Greene, Simon Kenneth
(86) International application number: PCT/US2004/001674
(87) International publication number: WO 2004/066609

(56) References cited:
- EP-A- 0 690 413
- EP-A- 0 833 503
- EP-A- 1 081 960
- WO-A-02/07164
- US-A1- 2002 168 181
- US-B1- 6 363 380
- HONGJIANG ZHANG ET AL: "AUTOMATIC PARTITIONING OF FULL-MOTION VIDEO" MULTIMEDIA SYSTEMS, SPRINGER VERLAG, DE, vol. 1, no. 1, 1993, pages 10-28, XP000572496 ISSN: 0942-4962

## Description

In general, analog camera surveillance systems produce a time division multiplexed output that is stored to tape. The cameras are coupled to a multiplexor that switches at predetermined intervals between the cameras. Such systems have a first camera that outputs an image at T0 and a second camera that outputs an image at T1 etc. As such, the output tape contains images from each of the cameras in sequence. The time division multiplexing allows large amounts of information to be stored. However, if an event occurs that requires the video tape to be reviewed, finding a particular incident and demultiplexing the tape becomes a difficult and time consuming task.

Even if digital cameras are used and a digital output is produced, the multiplexed digital stream requires a great deal of human intervention in order to identify an event. Thus there is a need for an automated system for demultiplexing a video stream.

A method and device for digital video capture is disclosed by Hsiao and Yang in United States Patent Application number US 2002/0168181. This method and device is able to split video data into several whole video files and stores frames of the same scene into the same video file.

### SUMMARY OF THE INVENTION

In accordance with one aspect of the invention, a multiplexed motion picture stream (e.g., video) is demultiplexed in real time using image recognition techniques. In some embodiments, stored motion picture images of different channels can be viewed simultaneously at the same image by advancing to a given image of only one stored channel. The motion picture stream contains one or more images from each of a plurality of camera sources.

Illustrative embodiments of the invention are implemented as a computer program product having a computer usable medium with computer readable program code thereon. The computer readable code may be read and utilized by a computer system in accordance with conventional processes.

According to a first aspect of the invention, there is provided a method according to claim 1, wherein the method is for demultiplexing video images in a video stream.

According to a second aspect of the invention, there is provided a computer program product according to claim 19.

### BRIEF DESCRIPTION OF THE DRAWINGS

The features of the invention will be more readily understood by reference to the following detailed description, taken with reference to the accompanying drawings, in which:
Fig. 1 shows one environment for implementing a first embodiment for demultiplexing video images;
Fig. 1A is a flow diagram illustrating demultiplexing video images from a plurality of cameras in a stream of video images;
Fig. 1B is a flow diagram illustrating further aspects of demultiplexing video images wherein the images are sub-sampled;
Fig. 1C is a flow diagram illustrating further aspects of demultiplexing video images wherein sub-sections of the images are compared;
Fig. 1D is a screen shot showing a graphical display of views from multiple cameras;

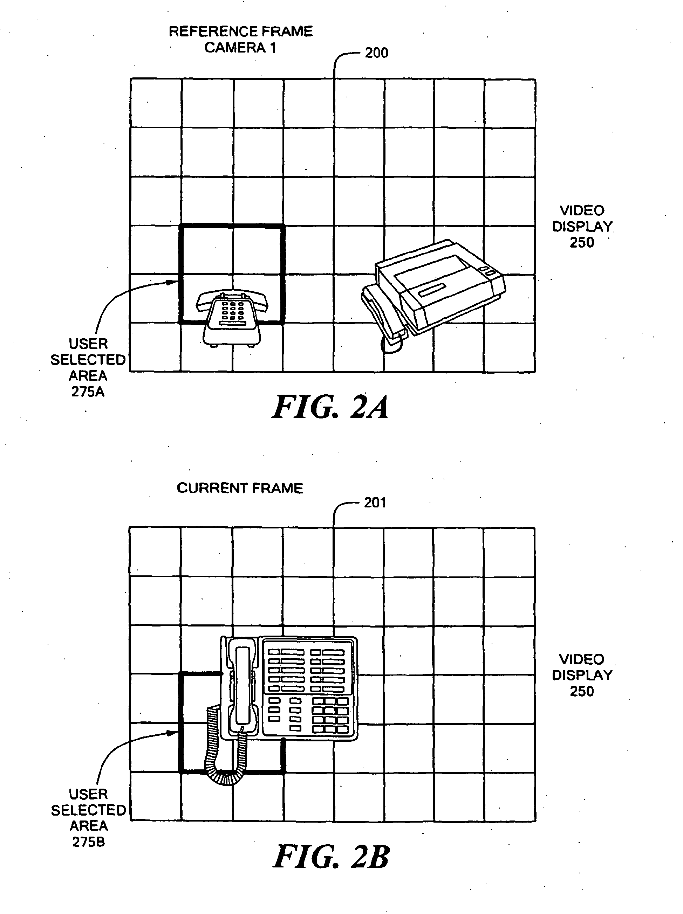

Fig. 2A represents a reference image as displayed on a display device and the lined box indicates the user defined area;
Fig. 2B represents the current image as displayed on a display device and shows that the same user defined area as that in Fig. 2A is used for comparison;
Fig. 3 shows three cameras (camera 1, camera 2, and camera 3) producing a sequence of multiplexed video images in which an image from each camera is added to the sequence over time;
Fig. 3A shows a temporal representation of images from cameras 1-3;
Fig. 3B shows temporally the shift in pixels for camera 1 from time T0 to time T3;
Fig. 4 shows a user selected region of interest in which the region contains a displayed date and time; and
Fig. 5 is an embodiment of the invention in which modules are constructed in hardware to perform the functions of the disclosed method.

### Detailed Description of Specific Embodiments

As used in the following text, the term "digital video" implies a digital representation of a sequence of images which may be temporally displayed on a display device. Typically, digital video contains a plurality of frames wherein each frame represents a separate image. The frames may be further subdivided such that the frames are made up of a series of pixels. As used in the following description the term "pixel" shall mean a single point of an image. The greater the number of pixels that are contained in an image, the greater the resolution of the video. Resolutions are conventionally referenced by length and width measurements of the number of pixels, for example, in a resolution of 800x600, there are 800 pixels along the length of an image by 600 pixels along the width of the image.

A "channel" as defined herein is either a physical or virtual separation of information that allows the information to be stored and retrieved from memory. For example, a channel can be a designated storage location in memory that is associated with a particular camera. Similarly, a channel may simply be the association of information with a delineator, such as a camera name or number.

In an embodiment of the present invention, video images in a stream of images formed from a plurality of video sources are demultiplexed so that the images from a given source can be collected, analyzed and viewed.

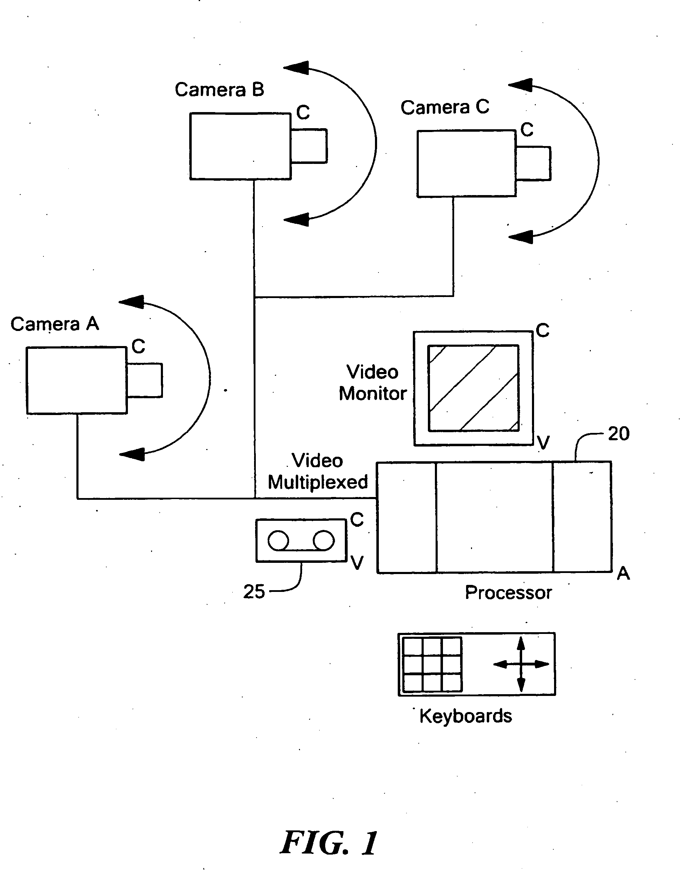

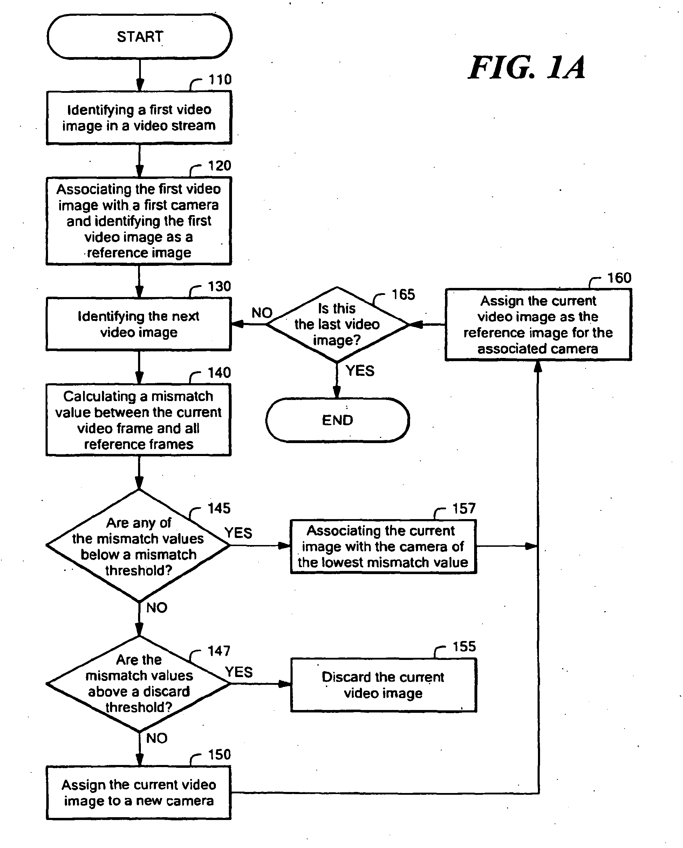

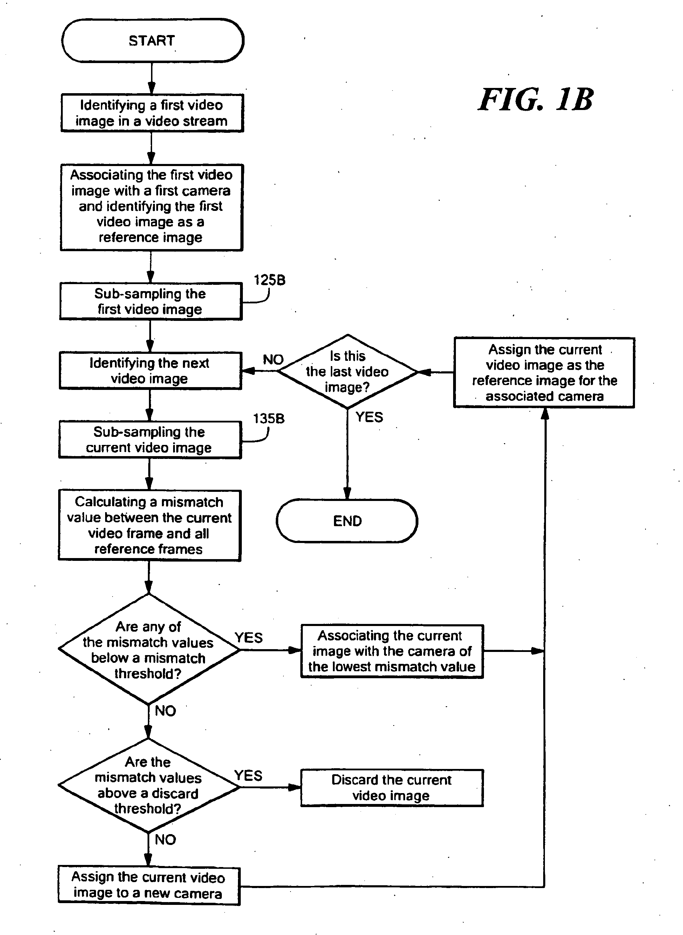

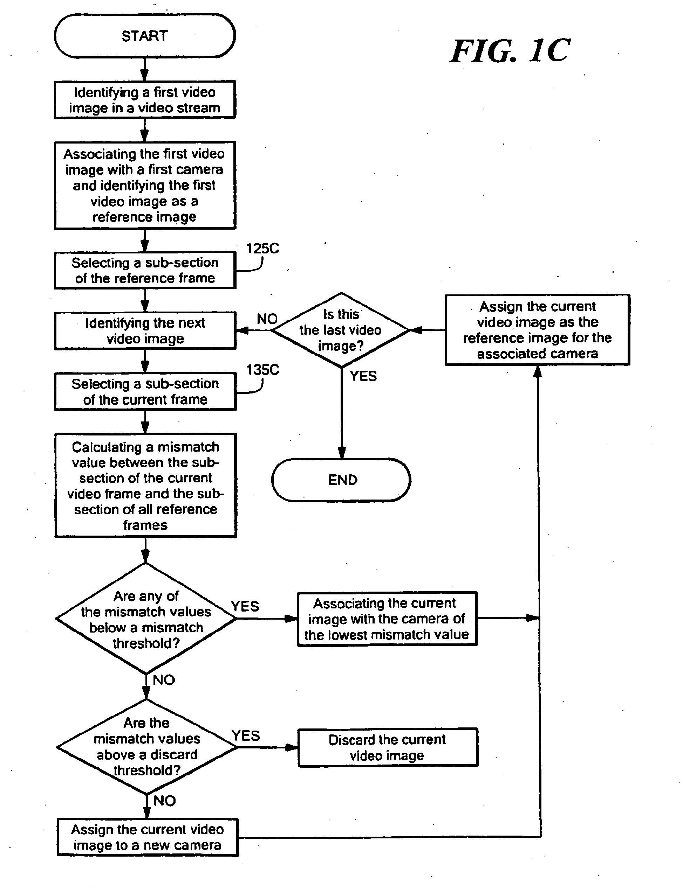

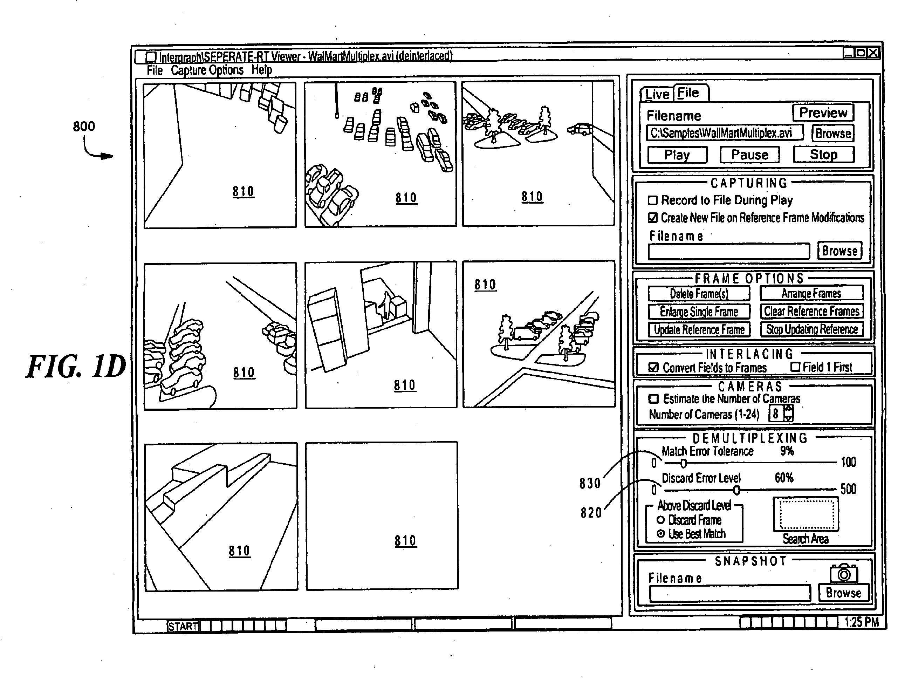

Fig. 1 shows one environment for implementing an embodiment of the invention. In Fig. 1 a plurality of cameras (Camera A, Camera B, and Camera C) are shown. Each camera produces a video signal containing video information which is multiplexed together and stored either in a digital format in memory associated with a processor 20 or in digital or analog format on a tape 25. The multiplexed information may contain header information to identify the source, but the present invention does not need header information to demultiplex the information. In fact, if header information exists, the present invention as described will either remove the header information or skip the header information and only process information that forms an image. The multiplexed information is subsequently demultiplexed by the processor. If the video information is in an analog format, the information is first digitized in an analog to digital conversion process which is well known to those of ordinary skill in the art. After the video information is digitized, the sequence of digital data is transferred to a processor. The images may be compressed or uncompressed or in field or frame format. If the information is compressed the processor will decompress the images prior to demultiplexing the video image stream. Similarly, the digital video may be in any one of a number of color space representations including RGB and YUV. The processor may demultiplex the information in real-time, such that as the information is captured from the cameras and multiplexed together, the information can be streamed to the processor and demultiplexed. Similarly, the stream of information can first be stored in memory and then provided to the processor.

The processor performs the operation as described with respect to the flow charts of Figs. 1A for demultiplexing the video image stream. The video image stream can be demultiplexed without user intervention and under total control of the processor. In certain embodiments, a user may change parameters or reset the system or manually select images to be associated with a separate channel. However, even in this type of an embodiment, the system can automatically process the image stream.

It should be understood that within this disclosure the term frame will be used to refer to a video image which is to be displayed for a designated time period. The disclosure is equally applicable to video fields which are normally produced for display devices displaying interlaced images.

As shown in Figs. 1A, a first video image is identified in a video stream 110. As previously stated the video stream may come directly from a plurality of cameras after the images from the cameras have been multiplexed or the video stream may come from memory that is brought into the processor. The first video image in the video stream is parsed and stored in a memory location associated with the processor. The processor associates the first video image with a first camera and the image is marked as a reference image for the first camera 120. As a reference image for a camera, the image is used for comparisons with images in the video stream as discussed below.

The next image ("current image") is identified in the video stream 130. The image data is parsed and stored to memory associated with the processor. The processor then recalls all of the reference images and the current image and compares the image data 140. During this comparison a mismatch value is calculated. The mismatch value can be the percentage of error between pixels of a reference image and the current image. The mismatch value can be calculated in any number of ways so long as it is a comparison of the amount of shared information between the reference image and the current image. For example, difference ratios can be calculated between the current image and each reference image of an identified source (camera). The sum of the absolute value of the difference between the current image's pixels and the reference image's pixels is calculated and then divided by the sum of the intensity values of the current image's pixels. This ratio represents the difference between the current image and a given camera reference image.

A separate mismatch value is calculated for each reference image and the current image. In the flow chart, at this stage, there is only a single reference image, since only one camera has been identified, but as more images are identified as coming from different reference cameras, a reference frame will be associated with each camera.

The processor then automatically identifies if any of the determined mismatch values are below a mismatch threshold 145. Although the term below is used, the term equal to or below may be substituted without deviating from the scope of the invention. Further, the comparison process assumes that the mismatch values are provided on a scale in which a lower value indicates that the representative image and the current image share more information in common than if the mismatch value was higher. It should be understood that a reverse scale could be implemented wherein the greater the mismatch value, the more information that is shared between the current image and the representative image. In such a situation all of the comparisons would be reversed.

If the mismatch values are below a mismatch threshold, the current image is associated with the camera (reference image) having the lowest mismatch value 157. The current image is then made the reference image for the camera and replaces the previous reference image 160. If none of the mismatch values are below the mismatch threshold then, the processor compares the mismatch values to a discard threshold 147. The discard threshold is only used for comparison purposes once an image has been associated with all of the channels/cameras.

If all of the mismatch values are not above a discard threshold, the processor assigns the current video image to a new camera 150. For example, the current image would be associated with camera number two as the first reference image was associated with camera number one. In the process of assigning the current video image to a new camera, the current image may be provided with a header which indicates that the current image is from the second camera. The processor may also store the current image to a memory location associated with the second image. The memory location may be shared memory with the other cameras or may be separate memory which is exclusively used for camera two. If the memory is shared memory, the processor will construct a (look-up-table) LUT for associating the image data with a particular camera so that the images for the camera can be retrieved and displayed. If all of the mismatch values are above the discard threshold, then the system can automatically discard the current video image 155. The image may be stored and saved to a separate memory location for further review. In other embodiments, the image is discarded and is not stored.

If the current video image is assigned to a new camera, the processor identifies the current image as the reference image for the new camera 160.

The processor then checks to see if there are any more images and if there are none, the process ends 165. If there are additional images, a new image is retrieved and the process continues. As the process continues, more current images are assigned to new cameras, until all of the cameras in the system have an associated reference image. The processor can either be programmed with the total number of camera or the processor can automatically determine the total number of cameras. In the surveillance industry, multiplexed video is multiplexed such that an image or multiple images from each camera are stored in a sequential manner (camera 1, camera 2, etc.) within the video stream. For example if there are three cameras, one image from each camera may be stored in the stream, such that the first image is taken at T0 and the second image is at T1 and the third at T2. In other embodiments, certain cameras may add more than one image to the video stream before other cameras add images. For example, camera 1 may provide 3 images taken at T0, T1 and T2 to the video stream and then camera 2 provides an image at T3 and camera 3 at T4. As a result, after the processor processes the first few images using the method as described above for demultiplexing the video stream, all of the cameras are normally identified. If a camera, such as the first camera has a predetermined number of images associated with it, for example, 10 images, the processor can then count the total number of cameras having assigned images. Since multiple images have been associated with a camera (the first camera), it is very likely that images for all of the cameras have been processed and that the multiplexed video stream has looped around and back to the first camera.

In order to increase the speed of processing the video stream, the images may be sub-sampled. The images may be sub-sampled in both the horizontal and vertical directions prior to the images being compared. In one embodiment, the image which may be an NTSC frame is reduced in size, for example to 1 /8 of the original size prior to storage. Reduction of the image size may be simply achieved by removing pixels. For example, to reduce the number of pixels by a factor of 4 for an 800 x 600 pixel image, every other pixel could be removed such that there were 400 x 300 pixels. In a further example, the image may be transform coded, using a Fourier or other transform and then sub-sampled in the frequency domain. In another embodiment, the data may be reduced through averaging. For example, every eight rows of eight pixels could be averaged such that 64 pixels are reduced to one pixel.

This sub-sampling is shown in Fig. 1B. Both the reference image and the current image are sub-sampled prior to comparison 125B, 135B. The video images may be stored in their entirety with all of their pixel information for display purposes, but the images are sub-sampled to increase the speed of the comparison process. Further Fig. 1C shows that a section of the image data may be used for the comparison process rather than use all of the displayable image data 125C, 135C. A user of the system, can pre-select or the system may pre-select a section of the image data to compare. When the term section is used in this application, the term implies that the image data is displayed on a display device and a block or other shape is selected such that less than all of the image data is selected. If the section is predetermined, the image data does not need to be displayed on a display device. The image data will be selected based on the address location that is associated with the section of the display device that the user desires to have compared.

It should be understood by one of ordinary skill in the art that both sub-sampling and also selection of a sub-section of an image may be used in combination to further increase the speed for comparing images and demultiplexing the image stream.

In certain embodiments, prior to comparison of the reference images and current image, the selected area of the images are normalized so as to remove any change in brightness/intensity from the comparison. For example, the average intensity value for the pixels in the user selected area in the reference image and the same area in the current image are calculated. The average intensity value is subtracted from each of the pixel intensity values. This step normalizes the values accounting for any changes in brightness, such as sudden flashes of light. Thus, only the absolute value of the variation about the median of the two images is compared. For example, if a camera is monitoring an automated teller machine and a car approaches the machine in which the headlights of the car suddenly illuminate the viewing area, this lighting change will be accounted for. This normalization may also be performed in any one of a number of ways known in the art, including using the RMS value as opposed to the average intensity for the user selected area.

During the course of demultiplexing the images, the demultiplexing process can be displayed on a display device 800. The images that are associated with a camera are displayed in separate windows 810. The reference image is displayed in the window for each of the cameras as shown in Fig.1D. By continually displaying and resaving the reference image for each camera, temporal synchronization between each of the various cameras is maintained. For example for each cycle through a four camera time division surveillance system where camera one captures three images before camera two takes an image, and both cameras three and four each take one image each, each channel associated with a camera will have six images saved. Camera one will have the images displayed at T0, T1, and T2 followed by the T2 image repeated three additional times. Camera 2 will have three blank images and then its image at T3 which is repeated two additional times. Camera three would have four blank images stored followed by the image at T4 which is repeated twice and camera four would have five blank images followed by the image taken at T5. This accounts for the first cycle through the cameras. On subsequent cycles, the reference frame would be repeated until a new current frame is associated with the camera and the reference frame is updated. As such, images would appear for all of the cameras on the display device.

Since each channel for a camera stores an equal number of images, the images can be viewed in a synchronized fashion. As such, a user of the system either during the demultiplexing process or after all of the images have been demultiplexed, can access a point in time and then view all of the images captured by all of the cameras during that time period. For, example a user of the system can select to rewind or forward through a single set of images for a particular camera, the system can then display the images for all of the cameras that occur at the same time as that for the selected camera.

The system and method as defined above will operate to demultiplex a video stream without user intervention. However, a user may override the system and change settings within the system. For example, a user may change the disregard threshold 820 or the mismatch threshold 830 as shown in Fig. 1D. A user may assign an image to a camera even though the system indicates that the image should be discarded or assigned to a different camera. As such, the system and method provides the user with a graphical user interface which provides controls for changing the various parameters of the system and overriding the system.

The process of replacing the reference image with the current image assists in source identification, since the effect of changes which gradually occur, such as lighting changes between day and night and camera panning are minimized.

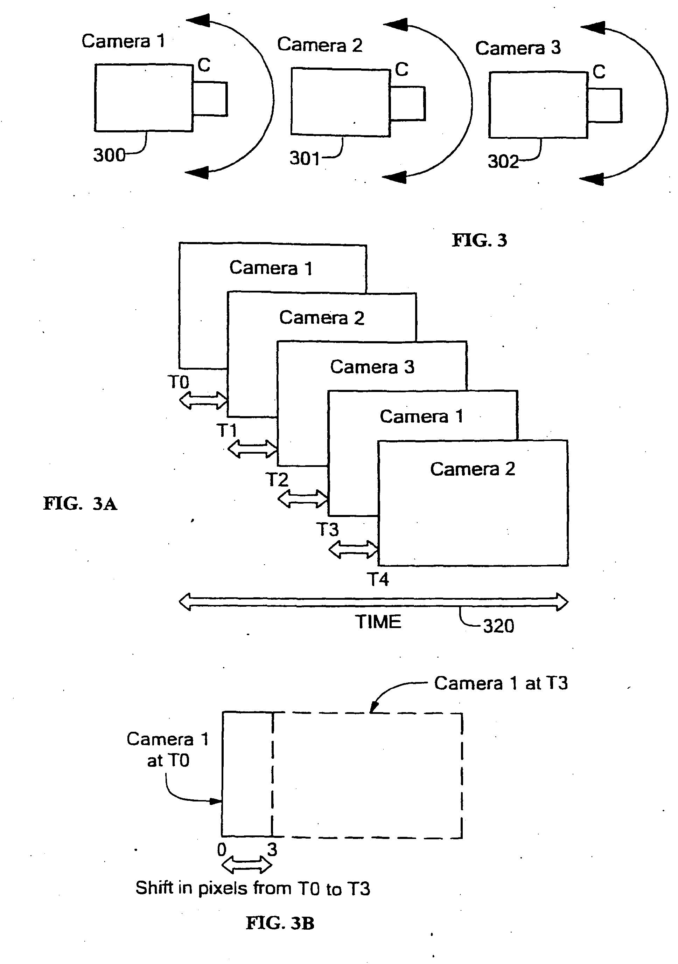

In one embodiment of the invention cameras film an area by sweeping across the area. The images captured by the sweeping cameras which are multiplexed together are subsequently demultiplexed as shown in Fig.3. In this embodiment, when the mismatch threshold is set for associating an image with a camera, the temporal change from image to image as the camera sweeps is taken into account. For example, Fig. 3 shows three cameras (camera 1, camera 2, and camera 3) producing a sequence of multiplexed video images 320 in which an image from each camera is added to the sequence over time. After an image from all three cameras has been saved to the sequence, the process repeats. In Fig. 3A images from camera 1 occur at T0 and T3. As shown in Fig. 3B if the image from T0 is shifted by three pixels which accounts for the movement of the camera between T0 and T3 and the images are overlaid the majority of the pixels from the image at T0 will overlap with the image at T3. By replacing the reference image with the current image and using the updated reference image during comparison, the amount of movement between the reference image and the current image is minimized such that more elaborate tracking and comparison techniques need not be employed. If the movement of the camera is slow in comparison to the time between saved images, the threshold can be adjusted to accommodate movement.

In other embodiments, the pixels of the reference image are shifted in position prior to comparison with the current image to account for the sweep of the camera. Additionally, in the comparison process, the current image can be shifted several times in several directions for calculating a difference ratio and comparing the ratio to the threshold. Further, the direction of movement can be anticipated through trend analysis wherein the direction of movement is based upon previous movement for the same source. Thus, by tracking the direction of movement, the number of shifts of the data locations and comparisons are reduced.

In yet another embodiment, after all of the cameras within the surveillance system have an associated image within the system, the processor has enough information to identify the order in which images are associated with the cameras. Once the order is known, either the system or the user can raise the mismatch threshold and assign a separate mismatch threshold for each of the camera such that only significant changes in the images are identified. For example if there is movement or substantial changes in lighting, then the system can identify these images and assign a tag to the digital data so that they can be found by a user at a subsequent time when reviewing the images. In another embodiment, in order to conserve memory space, only the video images that do have movement may be recorded and saved to the channel associated with the camera.

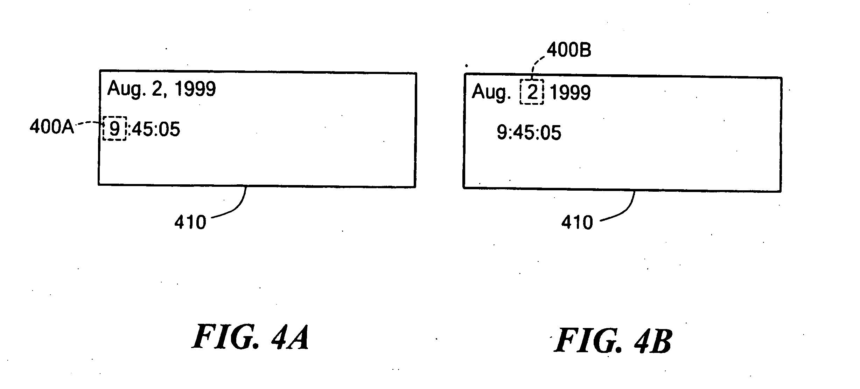

Under certain circumstances, the video images may be separated by time and/or date. In certain multiplexing systems in which cameras are digital cameras such as those that include CCD (charged-coupled devices), the digital data stream containing the digital images may include a date and time stamp preceding the digital video image. In such a case, the images can be stored and separated out according to date and time. In other multiplexing systems, in which the cameras produce an analog signal with a superimposed date and time or in which digital cameras include date and time within the digital image, the video images may be subdivided out by time and date. In this embodiment, after the video signal is digitized, the user selected region of interest is selected as the displayed time or date. If the video images are to be separated out by time, the user selected region could be selected to be the hour 400A as shown in Fig. 4A and any time there is a change in that area of the video image the data of the video image could be saved to a different memory location which is associated with that hour. Similarly in Fig. 4B a video display 410 of digital image data is shown in which the day of the month is the selected user-defined region 400B. The system can then continuously look for changes in data within the selected user-defined area that are above a threshold in order to identify images that come from different days of the month.

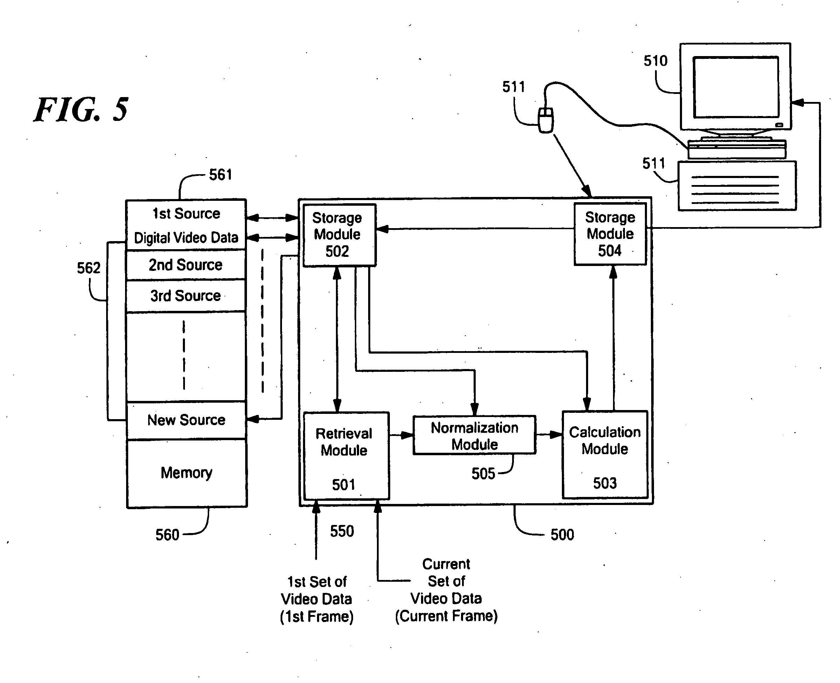

Fig. 5 is another embodiment of the invention in which the invention is in a device form 500. The device 500 may be an electronic device such as a programmed FPGA module or an ASIC chip. The device 500 includes a retrieval module 501 which retrieves or receives digital image data 550. The digital image data includes images of video data from multiple sources. The retrieval module 501 retrieves a first set of digital video data representative of a first image and also retrieves a current set of digital video data representative of a current image. The retrieval module 501 passes the first set of digital data to a storage module 502. The storage module 502 stores to memory 560 the first set of digital video data to a memory location associated with a first source 561. The data is also identified as the representative video data of the first source. The retrieval module 501 passes the first set of digital video data to a calculation module 503 along with the current set of digital video data.

The calculation module 503 calculates a difference ratio using the first set of digital video data and the current set of digital video data as explained above. If more than one source has already been identified, the digital video data of each representative image for a source is retrieved and a difference ratio is calculated for each. The difference ratio(s) ("mismatch values") are forwarded to a query module 504. The query module 504 compares the difference ratio(s) to a mismatch threshold. If a difference ratio for a representative image of a camera source is below the threshold then the current image is associated with that camera.

The digital video data is then stored in memory associated with the identified camera 562. For example if the mismatch value for the representative image of the 4`" camera is below the mismatch threshold, the current digital video data will be associated with that camera. Further, the current image will become the representative image of the 4^{th} camera. The memory that is associated with a camera may be either shared memory, wherein an identifier is associated with the image data to identify the image data as being associated with the camera or the memory may be separate or segmented memory. If the memory is completely separate the processor will send the associated image data to a particular physical piece of memory such as a RAM chip. If the memory is segmented, various memory addresses will be associated with a particular camera and the processor will have a LUT and will assign the digital image data to the memory segment that is associated with the camera.

If all of the difference ratios are above the mismatch threshold the query module 504 compares the mismatch values to a discard threshold. The system can then automatically discard the image data without a user's intervention if the mismatch values are all above the discard threshold. If the mismatch values are not above the discard threshold, then the query module will assign the image data to a new camera source automatically. In other embodiments, a user receives a message on the display device 510 that the current image of video data cannot readily be associated with a particular source since the mismatch values are above a threshold. The user can then send a response through an input device 511, such as a keyboard or a mouse which is connectively coupled to the device which indicates that the current image is either from the first source or other previously identified source, should be associated with a new source or should be discarded. The query module 504 receives this information and instructs the storage module 502 to store the current digital video data for the current image of video in a memory location with the identified source. The user of the system is provided with a display of the current image, as well as, each representative image for each camera. This allows the user to make a visual comparison aiding in the identification process.

It should be understood that if the user identifies the current digital video data as coming from a new source the current digital video data will be associated with a memory location associated with a new camera source. A normalization module 505 may also be included in the device. The normalization module normalizes the digital video data of the current video image as compared to the representative video images. As expressed above, normalization of the digital video data can account for changes in lighting such as the changes that occur from day to night. Normalization occurs prior to the calculation of the difference ratio.

It should be noted that the flow diagrams are used herein to demonstrate various aspects of the invention, and should not be construed to limit the present invention to any particular logic flow or logic implementation. The described logic may be partitioned into different logic blocks (e.g., programs, modules, functions, or subroutines) without changing the overall results or otherwise departing from the true scope of the invention. Often times, logic elements may be added, modified, omitted, performed in a different order, or implemented using different logic constructs (e.g., logic gates, looping primitives, conditional logic, and other logic constructs) without changing the overall results or otherwise departing from the true scope of the invention.

The present invention may be embodied in many different forms, including, but in no way limited to, computer program logic for use with a processor (*e.g.*, a microprocessor, microcontroller, digital signal processor, or general purpose computer), programmable logic for use with a programmable logic device (*e.g.*, a Field Programmable Gate Array (FPGA) or other PLD), discrete components, integrated circuitry (*e.g.*, an Application Specific Integrated Circuit (ASIC)), or any other means including any combination thereof.

Computer program logic implementing all or part of the functionality previously described herein may be embodied in various forms, including, but in no way limited to, a source code form, a computer executable form, and various intermediate forms (*e.g.*, forms generated by an assembler, compiler, linker, or locator.) Source code may include a series of computer program instructions implemented in any of various programming languages (*e.g.*, an object code, an assembly language, or a high-level language such as Fortran, C. C++, JAVA, or HTML) for use with various operating systems or operating environments. The source code may define and use various data structures and communication messages. The source code may be in a computer executable form (*e.g.*, via an interpreter), or the source code may be converted (*e.g.*, via a translator, assembler, or compiler) into a computer executable form.

The computer program may be fixed in any form (*e.g.*, source code form, computer executable form, or an intermediate form) either permanently or transitorily in a tangible storage medium, such as a semiconductor memory device (*e.g.*, a RAM, ROM, PROM, EEPROM, or Flash-Programmable RAM), a magnetic memory device (*e.g.*, a diskette or fixed disk), an optical memory device *(e.g.,* a CD-ROM), a PC card (*e.g.*, PCMCIA card), or other memory device. The computer program may be fixed in any form in a signal that is transmittable to a computer using any of various communication technologies, including, but in no way limited to, analog technologies, digital technologies, optical technologies, wireless technologies, networking technologies, and internetworking technologies. The computer program may be distributed in any form as a removable storage medium with accompanying printed or electronic documentation (*e.g.*, shrink wrapped software or a magnetic tape), preloaded with a computer system (*e.g.*, on system ROM or fixed disk), or distributed from a server or electronic bulletin board over the communication system (*e.g.*, the Internet or World Wide Web.)

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (*e.g.*, VHDL or AHDL), or a PLD programming language (e.g.*,* PALASM, ABEL, or CUPL.)

The present invention may be embodied in other specific forms without departing from the true scope of the invention. The described embodiments are to be considered in all respects only as illustrative and not restrictive.

## Claims

1. A method for demultiplexing video images from a time-division multiplexed video stream, the video images produced by a plurality of cameras, the method comprising:
receiving at least a portion of the time-division multiplexed video stream composed of a plurality of video images in a processor;
parsing a first video image from the time-division multiplexed video stream;
parsing a second video image from the time-division multiplexed video stream; and
determining an amount of mismatch between the first and second video image and **characterized by** the step of,
if the mismatch is below a mismatch threshold, assigning the first and second video images to a first channel, wherein the second image becomes a reference image for the first channel, and in that the first and second video images are parsed without reference to a source.

2. The method according to claim 1, wherein the first channel includes a memory storage location for storing video images.

3. The method according to claim 1 or 2, wherein the first channel is associated with a first camera.

4. The method according to any preceding claim, wherein if the mismatch is above a mismatch threshold, assigning the first video image to a first channel and the second video image to a second channel, wherein the first video image becomes a reference image for the first channel and the second video image becomes a reference image for the second channel.

5. The method according to claim 4, wherein the second channel is associated with a second camera.

6. The method according to claim 4 or 5, wherein after each channel associated with a camera has been assigned a reference video image,
comparing a new video image from the time-division multiplexed video stream with the reference video images from each channel;
determining an amount of mismatch between the new video image and the reference video images from each channel; and
assigning the new video image to a channel having the lowest mismatch, wherein the new video image becomes the reference video image for that channel.

7. The method according to claim 6, wherein if the lowest mismatch is above a discard threshold, then discarding the new video image rather than assigning the new video image to a channel.

8. The method according to claim 4 or 5, further comprising:
comparing a third video image to the reference video images from the first and second channels to determine a first and a second mismatch;
if the first and second mismatches are above a mismatch threshold assigning the third video image to a third channel, wherein the third video image becomes the reference image for the third channel.

9. The method according to claim 4, further comprising:
comparing a third video image to the reference video images for the first and second channels to determine a first and a second mismatch;
if the first mismatch and second mismatches are below a mismatch threshold, assigning the third video image to the channel associated with the lower mismatch, wherein the third video image becomes the reference video image for that channel.

10. The method according to claim 4 or 5, further comprising:
comparing a third video image to the reference video images for the first and second channels to determine a first and second mismatch;
if both the first and the second mismatches are above a discard threshold, discarding the third video image.

11. The method according to any of claims 4 to 10, wherein each channel is associated with a camera.

12. The method according to any preceding claim, further comprising:
providing the number of cameras to the processor.

13. The method according to any preceding claim, wherein channel assignment is performed in real-time.

14. The method according to any preceding claim, wherein the time-division multiplexed image stream is parsed and the video images are assigned to a channel in real-time .

15. The method according to any preceding claim, wherein the first video image and the second video image are sub-sampled prior to comparison.

16. The method according to any preceding claim, wherein if the time-division multiplexed video image stream contains header information, discarding the header information.

17. The method according to any preceding claim, further comprising:
providing a user interface for setting the mismatch level;
receiving user input of the mismatch level.

18. The method according to any preceding claim, further comprising:
providing a user interface for setting the discard level;
receiving user input of the discard level.

19. A computer program product containing computer code thereon readable by a computer for demultiplexing video images in a time-division multiplexed video stream, the video images produced by a plurality of cameras, the computer code comprising:
computer code for sequentially receiving the time-division multiplexed video stream composed of a plurality of video images in a processor;
computer code for parsing a first video image from the time-division multiplexed video stream;
computer code parsing a second video image from the time-division multiplexed video stream; and
computer code for determining an amount of mismatch between the first and second video image,
and **characterised by** computer code for assigning the first and second video images to a first channel if the mismatch is below a mismatch threshold, wherein the second video image become a reference image for the first channel, and the first and second video images are parsed without reference to source.

20. The computer program product according to claim 19, wherein in the computer code for assigning, the computer code assigns the first and second video images to a memory storage location.

21. The computer program product according to claim 19 or 20, wherein the first channel is associated with a first camera.

22. The computer program product according to claim 19, 20 or 21, further comprising:
computer code for assigning the first video image to a first channel and the second video image to a second channel if the mismatch is above a mismatch threshold, wherein the first video image becomes the reference image for the first channel and the second video image becomes the reference image for the second channel.

23. The computer program product according to claim 22, wherein the second channel is associated with a second camera.

24. The computer program product according to claim 22 or 23, further comprising:
computer code for comparing a new video image from the time-division multiplexed video stream with the reference images from each channel after each channel associated with a camera has been assigned a reference video image;
computer code for determining an amount of mismatch between the new video image and the reference images from each channel; and
computer code for assigning the new video image to a channel having the lowest mismatch, wherein the new video image becomes the reference video image for that channel.

25. The computer program product according to claim 24, further comprising:
computer code for discarding the new video image if the lowest mismatch is above a discard threshold rather than assigning the new video image to a channel.

26. The computer program product according to claim 22 or 23, further comprising:
computer code for comparing a third video image to the reference images of the first and the second channels to determine a first and a second mismatch;
computer code for assigning the third video image to a third channel if the first and second mismatches are above a mismatch threshold, wherein the third video image becomes the reference image for the third channel.

27. The computer program product according to claim 22 or 23, further comprising:
computer code for comparing a third video image to the reference images of the first and the second channels to determine a first and a second mismatch;
computer code for assigning the third video image to the channel associated with the lower mismatch if the first mismatch and second mismatches are below a mismatch threshold, wherein the third video image becomes the reference image for that channel.

28. The computer program product according to claim 22 or 23, further comprising:
computer code for comparing a third video image to the reference video images for the first and second channels to determine a first and second mismatch;
computer code for discarding the third video image if both the first and the second mismatches are above a discard threshold.

29. The computer program product according to any of claims 22 to 28, wherein each channel is associated with a camera.

30. The computer program product according to any of claims 19 to 29, further comprising:
computer code providing a user interface for entering the number of cameras.

31. The computer program product according to any of claims 19 to 30, wherein channel assignment is performed in real-time.

32. The computer program product according to any of claims 19 to 31, wherein the computer program parses the time-division multiplexed image stream and the video images are assigned to a channel in real-time.

33. The computer program product according to any of claims 19 to 32, further comprising computer code for sub-sampling the first video image and the second video image are prior to comparison.

34. The computer program product according to any of claims 19 to 33, further comprising computer code for identifying header information associated with video images and discarding the header information.

35. The computer program product according to any of claims 19 to 34, further comprising:
computer code for providing a user interface for setting the mismatch level;
computer code for receiving user input of the mismatch level.

36. The computer program product according to any of claims 19 to 35, further comprising:
computer code for providing a user interface for setting the discard level;
computer code for receiving user input of the discard level.

## Patentansprüche

1. Verfahren zum Demultiplexen von Video-Bildern aus einem zeitgemultiplexten Video-Datenstrom, wobei die Video-Bilder durch eine Vielzahl von Kameras erzeugt sind, wobei das Verfahren aufweist:
Empfangen wenigstens eines Teils des zeitgemultiplexten Video-Datenstroms, welcher eine Vielzahl von Video-Bildern umfasst, in einem Prozessor;
Analysieren eines ersten Video-Bildes aus dem zeitgemultiplexten Video-Datenstrom; Analysieren eines zweiten Video-Bildes aus dem zeitgemultiplexten Video-Datenstrom; und
Bestimmen eines Betrages an Fehlanpassung zwischen dem ersten und dem zweiten Video-Bild und **gekennzeichnet durch** den folgenden Schritt,
wenn die Fehlanpassung unterhalb eines Fehlanpassungsschwellwertes ist, Zuordnen der ersten und zweiten Video-Bilder zu einem ersten Kanal, wobei das zweite Bild als Referenzbild für den ersten Kanal dient und **dadurch**, dass die ersten und zweiten Video-Bilder ohne Bezug auf eine Quelle analysiert werden.

2. Verfahren nach Anspruch 1, wobei der erste Kanal einen Speicherort beinhaltet, um Video-Bilder zu speichern.

3. Verfahren nach Anspruch 1 oder 2, wobei der erste Kanal zu einer ersten Kamera gehört.

4. Verfahren nach einem der vorausgehenden Ansprüche, wobei, falls die Fehlanpassung oberhalb eines Fehlanpassungsschwellwertes ist, das erste Video-Bild einem ersten Kanal und das zweite Videobild einem zweiten Kanal zugeordnet werden, wobei das erste Videobild als Referenzbild für den ersten Kanal dient und das zweite Video-Bild als Referenzbild für den zweiten Kanal dient.

5. Verfahren nach Anspruch 4, wobei der zweite Kanal zu einer zweiten Kamera gehört.

6. Verfahren nach Anspruch 4 oder 5, wobei, nachdem jeder Kanal, welcher zu einer Kamera gehört, einem Referenz-Video-Bild zugeordnet wurde,
ein neues Video-Bild von dem zeitgemultiplexten Video-Datenstrom mit den Referenz-Video-Bildern jedes Kanals verglichen wird;
ein Betrag der Fehlanpassung zwischen dem neuen Video-Bild und den Referenz-Video-Bildern von jedem Kanal bestimmt wird; und
das neue Video-Bild einem Kanal zugeordnet wird, welcher die niedrigste Fehlanpassung besitzt, wobei das neue Video-Bild als Referenz-Video-Bild für diesen Kanal dient.

7. Verfahren nach Anspruch 6, wobei, falls die niedrigste Fehlanpassung oberhalb eines verworfenen Schwellwertes ist, dann das neue Video-Bild verworfen wird, anstatt das neue Video-Bild einem Kanal zuzuordnen.

8. Verfahren nach Anspruch 4 oder 5, welches ferner aufweist:
Vergleichen eines dritten Video-Bildes mit den Referenz-Video-Bildern von den ersten und zweiten Kanälen, um eine erste und eine zweite Fehlanpassung zu bestimmen;
falls die ersten und zweiten Fehlanpassungen oberhalb eines Fehlanpassungsschwellwerts sind, Zuordnen des dritten Video-Bildes zu einem dritten Kanal, wobei das dritte Video-Bild als Referenzbild für den dritten Kanal dient.

9. Verfahren nach Anspruch 4, welches ferner aufweist:
Vergleichen eines dritten Video-Bildes mit den Referenz-Video-Bildern für die ersten und zweiten Kanäle, um eine erste und eine zweite Fehlanpassung zu bestimmen;
falls die erste Fehlanpassung und die zweiten Fehlanpassungen unterhalb eines Fehlanpassungsschwellwerts liegen, Zuordnen des dritten Video-Bildes zu dem Kanal, welcher zu der niedrigeren Fehlanpassung gehört, wobei das dritte Video-Bild als Referenz-Video-Bild für den Kanal dient.

10. Verfahren nach Anspruch 4 oder 5, welches ferner aufweist:
Vergleichen eines dritten Video-Bildes mit den Referenz-Video-Bildern für die ersten und zweiten Kanäle, um eine erste und zweite Fehlanpassung zu bestimmen;
falls sowohl die erste als auch die zweite Fehlanpassung oberhalb eines
Verwerfungsschwellwerts sind, Verwerfen des dritten Video-Bildes.

11. Verfahren nach einem der Ansprüche 4 bis 10, wobei zu jedem Kanal eine Kamera gehört.

12. Verfahren zu einem der vorausgehenden Ansprüche, welches ferner aufweist:
Liefern der Anzahl der Kameras an den Prozessor.

13. Verfahren nach einem der vorausgehenden Ansprüche, wobei die Kanalzuordnung in Echtzeit durchgeführt wird.

14. Verfahren nach einem der vorausgehenden Ansprüche, wobei der zeitgemultiplexte Bilddatenstrom in Echtzeit analysiert wird und die Video-Bilder einem Kanal in Echtzeit zugeordnet werden.

15. Verfahren nach einem der vorausgehenden Ansprüche, wobei das erste Video-Bild und das zweite Video-Bild vor dem Vergleich unterabgetastet werden.

16. Verfahren nach einem der vorausgehenden Ansprüche, wobei der zeitgemultiplexte Video-Bild-Datenstrom eine Datenkopf- bzw. Anfangsblockinformation enthält, welche die Anfangsblockinformation verwirft.

17. Verfahren nach einem der vorausgehenden Ansprüche, welches ferner aufweist:
Liefern einer Benutzerschnittstelle, um den Fehlanpassungspegel einzustellen; Empfangen des Benutzereingangssignals des Fehlanpassungspegels.

18. Verfahren nach einem der vorausgehenden Ansprüche, welches ferner aufweist:
Liefern einer Benutzerschnittstelle zum Einstellen des Verwerfungspegels;
Empfangen des Nutzereingangssignals des Verwerfungspegels.

19. Computerprogrammprodukt, welches einen Computercode darauf enthält, welcher durch einen Computer für das Demultiplexen von Video-Bildern in einem zeitgemultiplexten Video-Datenstrom lesbar ist, wobei die Video-Bilder durch eine Vielzahl von Kameras erzeugt sind, wobei der Computercode aufweist:
einen Computercode, um sequenziell den zeitgemultiplexten Video-Datenstrom in einem Prozessor zu empfangen, welcher eine Vielzahl von Video-Bildern umfasst; einen Computercode, um ein erstes Video-Bild von dem zeitgemultiplexten Video-Datenstrom zu analysieren;
einen Computercode, welcher ein zweites Video-Bild von dem zeitgemultiplexten Datenstrom analysiert; und
einen Computercode, um einen Betrag an Fehlanpassung zwischen dem ersten und
dem zweiten Video-Bild zu bestimmen,
und durch einen Computercode **gekennzeichnet**, um die ersten und zweiten Video-Bilder einem ersten Kanal zuzuordnen, falls die Fehlanpassung unterhalb eines Fehlanpassungsschwellwertes ist, wobei das zweite Video-Bild als Referenzbild für den ersten Kanal dient und die ersten und zweiten Video-Bilder ohne Referenz auf die Quelle analysiert werden.

20. Computerprogrammprodukt nach Anspruch 19, wobei in dem Computercode zum Zuordnen der Computercode die ersten und zweiten Video-Bilder einem Speicherort zuordnet.

21. Computerprogrammprodukt nach Anspruch 19 oder 20, in welchem der erste Kanal zu einer ersten Kamera gehört.

22. Computerprogrammprodukt nach Anspruch 19, 20 oder 21, welches ferner aufweist:
einen Computercode zum Zuordnen des ersten Video-Bildes zu einem ersten Kanal und des zweiten Video-Bildes zu einem zweiten Kanal, wenn die Fehlanpassung oberhalb eines Fehlanpassungsschwellwertes ist, wobei das erste Video-Bild als Referenzbild für den ersten Kanal dient und das zweite Video-Bild als Referenzbild für den zweiten Kanal dient.

23. Computerprogrammprodukt entsprechend Anspruch 22, wobei der zweite Kanal zu einer zweiten Kamera gehört.

24. Computerprogrammprodukt nach Anspruch 22 oder 23, welches ferner aufweist:
einen Computercode zum Vergleichen eines neuen Video-Bildes von dem zeitgemultiplexten Video-Datenstrom mit den Referenzbildern jedes Kanals, nachdem jeder Kanal, welcher zu einer Kamera gehört, einem Referenz-Video-Bild zugeordnet wurde;
einen Computercode zum Bestimmen eines Betrages an Fehlanpassung zwischen dem neuen Video-Bild und den Referenzbildern von jedem Kanal; und
einen Computercode zum Zuordnen des neuen Video-Bildes zu einem Kanal, welcher die niedrigste Fehlanpassung besitzt, wobei das neue Video-Bild als Referenz-Video-Bild für diesen Kanal dient.

25. Computerprogrammprodukt entsprechend Anspruch 24, welches ferner aufweist:
einen Computercode zum Verwerfen des neuen Video-Bildes, falls die niedrigste Fehlanpassung oberhalb eines Verwerfungsschwellwertes ist, anstatt das neue Video-Bild einem Kanal zuzuordnen.

26. Computerprogrammprodukt nach Anspruch 22 oder 23, welches ferner aufweist:
einen Computercode zum Vergleichen eines dritten Video-Bildes mit den Referenzbildern des ersten und zweiten Kanals, um eine erste und eine zweite Fehlanpassung zu bestimmen;
einen Computercode zum Zuordnen eines dritten Video-Bildes zu einem dritten Kanal, falls die ersten und zweiten Fehlanpassungen oberhalb eines Fehlanpassungsschwellwertes ist, wobei das dritte Video-Bild als Referenzbild für den dritten Kanal dient.

27. Computerprogrammprodukt nach Anspruch 22 oder 23, welches ferner aufweist:
einen Computercode zum Vergleichen eines dritten Video-Bildes mit den Referenzbildern der ersten und zweiten Kanäle, um eine erste und eine zweite Fehlanpassung zu bestimmen;
einen Computercode zum Zuordnen des dritten Video-Bildes zu dem Kanal, welcher zu der niedrigeren Fehlanpassung gehört, falls die erste Fehlanpassung und die zweiten Fehlanpassungen unterhalb eines Fehlanpassungsschwellwertes sind, wobei das dritte Video-Bild als Referenzbild für diesen Kanal dient.

28. Computerprogrammprodukt nach Anspruch 22 oder 23, welches ferner aufweist:
einen Computercode zum Vergleichen eines dritten Video-Bildes mit den Referenz-Video-Bildern für die ersten und zweiten Kanäle, um eine erste und zweite Fehlanpassung zu bestimmen;
einen Computercode zum Verwerfen des dritten Video-Bildes, falls sowohl die erste als auch die zweite Fehlanpassung oberhalb eines Verwerfungsschwellwertes sind.

29. Computerprogrammprodukt nach einem der Ansprüche 22 bis 28, wobei jeder Kanal zu einer Kamera gehört.

30. Computerprogrammprodukt nach einem der Ansprüche 19 bis 29, welches ferner aufweist:
einen Computercode, welcher eine Benutzerschnittstelle liefert, um die Anzahl der Kameras einzugeben.

31. Computerprogrammprodukt nach einem der Ansprüche 19 bis 30, wobei die Kanalzuordnung in Echtzeit durchgeführt wird.

32. Computerprogrammprodukt nach einem der Ansprüche 19 bis 31, wobei das Computerprogramm den zeitgemultiplexten Bilddatenstrom in Echtzeit analysiert und die Video-Bilder einem Kanal in Echtzeit zugeordnet werden.

33. Computerprogrammprodukt entsprechend einem der Ansprüche 19 bis 32, welches ferner einen Computercode aufweist, um das erste Video-Bild und das zweite Video-Bild vor einem Vergleich unterabzutasten.

34. Computerprogrammprodukt nach einem der Ansprüche 19 bis 33, welches ferner einen Computercode aufweist, um die Anfangsblockinformation zu identifizieren, welche zu den Video-Bildern gehört, und die Anfangsblockinformation zu verwerfen.

35. Computerprogrammprodukt nach einem der Ansprüche 19 bis 34, welches ferner aufweist:
einen Computercode, um eine Benutzerschnittstelle zum Einstellen des Fehlanpassungspegels zu liefern;
einen Computercode, um das Benutzereingangssignal des Fehlanpassungspegels zu empfangen.

36. Computerprogrammprodukt nach einem der Ansprüche 19 bis 35, welches ferner aufweist:
einen Computercode, um eine Benutzerschnittstelle zu liefern, um den Verwerfungspegel einzustellen;
einen Computercode, um das Benutzereingangssignal des Verwerfungspegels zu empfangen.

## Revendications

1. Procédé pour démultiplexer des images vidéo à partir d'un flux vidéo multiplexé par répartition dans le temps, les images vidéo étant produites par une pluralité de caméras, le procédé comprenant :
la réception d'au moins une partie du flux vidéo multiplexé par répartition dans le temps composé d'une pluralité d'images vidéo dans un processeur ;
l'analyse d'une première image vidéo issue du flux vidéo multiplexé par répartition dans le temps ;
l'analyse d'une deuxième image vidéo issue du flux vidéo multiplexé par répartition dans le temps ; et
le fait de déterminer une quantité de non-correspondance entre les première et deuxième images vidéo et **caractérisé par** l'étape consistant à,
si la non-correspondance est inférieure à un seuil de non-correspondance, attribuer les première et deuxième images vidéo à un premier canal, la deuxième image devenant une image de référence pour le premier canal, et en ce que les première et deuxième images vidéo sont analysées sans référence à une source.

2. Procédé selon la revendication 1, dans lequel le premier canal comprend un emplacement de stockage à mémoire destiné à stocker des images vidéo.

3. Procédé selon la revendication 1 ou 2, dans lequel le premier canal est associé à une première caméra.

4. Procédé selon l'une quelconque des revendications précédentes, dans lequel, si la non-correspondance est supérieure à un seuil de non-correspondance, on attribue la première image vidéo à un premier canal et la deuxième image vidéo à un deuxième canal, la première image vidéo devenant une image de référence pour le premier canal et la deuxième image vidéo devenant une image de référence pour le deuxième canal.

5. Procédé selon la revendication 4, dans lequel le deuxième canal est associé à une deuxième caméra.

6. Procédé selon la revendication 4 ou 5, dans lequel, une fois que chaque canal associé à une caméra s'est vu attribuer une image vidéo de référence,
on compare une nouvelle image vidéo issue du flux vidéo multiplexé par répartition dans le temps avec les images vidéo de référence issues de chaque canal ;
on détermine une quantité de non-correspondance entre la nouvelle image vidéo et les images vidéo de référence issues de chaque canal ; et
on attribue la nouvelle image vidéo à un canal ayant la non-correspondance la plus faible, la nouvelle image vidéo devenant l'image vidéo de référence pour ce canal.

7. Procédé selon la revendication 6, dans lequel, si la non-correspondance la plus faible est supérieure à un seuil de refus, alors on refuse la nouvelle image vidéo au lieu d'attribuer la nouvelle image vidéo à un canal.

8. Procédé selon la revendication 4 ou 5, comprenant en outre :
la comparaison d'une troisième image vidéo avec les images vidéo de référence issues des premier et deuxième canaux pour déterminer des première et deuxième non-correspondances ;
si les première et deuxième non-correspondances sont supérieures à un seuil de non-correspondance, on attribue la troisième image vidéo à un troisième canal, la troisième image vidéo devenant l'image de référence pour le troisième canal.

9. Procédé selon la revendication 4, comprenant en outre :
la comparaison d'une troisième image vidéo avec les images vidéo de référence pour les premier et deuxième canaux pour déterminer des première et deuxième non-correspondances ;
si les première et deuxième non-correspondances sont inférieures à un seuil de non-correspondance, on attribue la troisième image vidéo au canal associé à la non-correspondance inférieure, la troisième image vidéo devenant l'image vidéo de référence pour ce canal.

10. Procédé selon la revendication 4 ou 5, comprenant en outre :
la comparaison d'une troisième image vidéo avec les images vidéo de référence pour les premier et deuxième canaux pour déterminer des première et deuxième non-correspondances ;
si les première et deuxième non-correspondances sont toutes les deux supérieures à un seuil de refus, on refuse la troisième image vidéo.

11. Procédé selon l'une quelconque des revendications 4 à 10, dans lequel chaque canal est associé à une caméra.

12. Procédé selon l'une quelconque des revendications précédentes, comprenant en outre :
le fait de fournir le nombre de caméras au processeur.

13. Procédé selon l'une quelconque des revendications précédentes, dans lequel l'attribution de canal est réalisée en temps réel.

14. Procédé selon l'une quelconque des revendications précédentes, dans lequel le flux d'image multiplexé par répartition dans le temps est analysé et les images vidéo sont attribuées à un canal en temps réel.

15. Procédé selon l'une quelconque des revendications précédentes, dans lequel la première image vidéo et la deuxième image vidéo sont sous-échantillonnées avant comparaison.

16. Procédé selon l'une quelconque des revendications précédentes, dans lequel, si le flux d'image multiplexé par répartition dans le temps contient des informations d'en-tête, on refuse les informations d'en-tête.

17. Procédé selon l'une quelconque des revendications précédentes, comprenant en outre :
le fait de prévoir une interface utilisateur pour établir le niveau de non-correspondance ;
la réception d'une entrée utilisateur du niveau de non-correspondance.

18. Procédé selon l'une quelconque des revendications précédentes, comprenant en outre :
le fait de prévoir une interface utilisateur pour établir le niveau de refus ;
la réception d'une entrée utilisateur du niveau de refus.

19. Produit de programme informatique contenant un code informatique lisible par un ordinateur pour démultiplexer des images vidéo dans un flux vidéo multiplexé par répartition dans le temps, les images vidéo étant produites par une pluralité de caméras, le code informatique comprenant :
un code informatique pour recevoir séquentiellement le flux vidéo multiplexé par répartition dans le temps composé d'une pluralité d'images vidéo dans un processeur ;
un code informatique pour analyser une première image vidéo issue du flux vidéo multiplexé par répartition dans le temps ;
un code informatique pour analyser une deuxième image vidéo issue du flux vidéo multiplexé par répartition dans le temps ; et
un code informatique pour déterminer une quantité de non-correspondance entre les première et deuxième images vidéo,
et **caractérisé par** un code informatique pour attribuer les première et deuxième images vidéo à un premier canal si la non-correspondance est inférieure à un seuil de non-correspondance, la deuxième image vidéo devenant une image de référence pour le premier canal, et les première et deuxième images vidéo sont analysées sans référence à une source.

20. Produit de programme informatique selon la revendication 19, dans lequel dans le code informatique d'attribution, le code informatique attribue les première et deuxième images vidéo à un emplacement de stockage à mémoire.

21. Produit de programme informatique selon la revendication 19 ou 20, dans lequel le premier canal est associé à une première caméra.

22. Produit de programme informatique selon la revendication 19, 20 ou 21, comprenant en outre :
un code informatique pour attribuer la première image vidéo à un premier canal et la deuxième image vidéo à un deuxième canal si la non-correspondance est supérieure à un seuil de non-correspondance, la première image vidéo devenant l'image de référence pour le premier canal et la deuxième image vidéo devenant l'image de référence pour le deuxième canal.

23. Produit de programme informatique selon la revendication 22, dans lequel le deuxième canal est associé à une deuxième caméra.

24. Produit de programme informatique selon la revendication 22 ou 23, comprenant en outre :
un code informatique pour comparer une nouvelle image vidéo issue du flux vidéo multiplexé par répartition dans le temps avec les images de référence issues de chaque canal une fois que chaque canal associé à une caméra s'est vu attribuer une image vidéo de référence ;
un code informatique pour déterminer une quantité de non-correspondance entre la nouvelle image vidéo et les images de référence issues de chaque canal ; et
un code informatique pour attribuer la nouvelle image vidéo à un canal ayant la non-correspondance la plus faible, la nouvelle image vidéo devenant l'image vidéo de référence pour ce canal.

25. Produit de programme informatique selon la revendication 24, comprenant en outre :
un code informatique pour refuser la nouvelle image vidéo si la non-correspondance la plus faible est supérieure à un seuil de refus au lieu d'attribuer la nouvelle image vidéo à un canal.

26. Produit de programme informatique selon la revendication 22 ou 23, comprenant en outre :
un code informatique pour comparer une troisième image vidéo aux images de référence des premier et deuxième canaux pour déterminer des première et deuxième non-correspondances ;
un code informatique pour attribuer la troisième image vidéo à un troisième canal si les première et deuxième non-correspondances sont supérieures à un seuil de non-correspondance, la troisième image vidéo devenant l'image de référence pour le troisième canal.

27. Produit de programme informatique selon la revendication 22 ou 23, comprenant en outre :
un code informatique pour comparer une troisième image vidéo aux images de référence des premier et deuxième canaux pour déterminer des première et seconde non-correspondances ; ,
un code informatique pour attribuer la troisième image vidéo au canal associé à la non-correspondance la plus faible, si la première non-correspondance et la deuxième non-correspondance sont inférieures à un seuil de non-correspondance, la troisième image vidéo devenant l'image de référence pour ce canal.

28. Produit de programme informatique selon la revendication 22 ou 23, comprenant en outre :
un code informatique pour comparer une troisième image vidéo aux images vidéo de référence pour les premier et deuxième canaux pour déterminer des première et deuxième non-correspondances ;
un code informatique pour refuser la troisième image vidéo si les première et deuxième non-correspondances sont toutes les deux supérieures à un seuil de refus.

29. Produit de programme informatique selon l'une quelconque des revendications 22 à 28, dans lequel chaque canal est associé à une caméra.

30. Produit de programme informatique selon l'une quelconque des revendications 19 à 29, comprenant en outre :
un code informatique fournissant une interface utilisateur pour entrer le nombre de caméras.

31. Produit de programme informatique selon l'une quelconque des revendications 19 à 30, dans lequel l'attribution de canal est réalisée en temps réel.

32. Produit de programme informatique selon l'une quelconque des revendications 19 à 31, dans lequel le programme informatique analyse le flux d'image multiplexé par répartition dans le temps et les images vidéo sont attribuées à un canal en temps réel.

33. Produit de programme informatique selon l'une quelconque des revendications 19 à 32, comprenant en outre un code informatique pour sous-échantillonner la première image vidéo et la deuxième image vidéo avant comparaison.

34. Produit de programme informatique selon l'une quelconque des revendications 19 à 33, comprenant en outre un code informatique pour identifier des informations d'en-tête associées aux images vidéo et refuser les informations d'en-tête.

35. Produit de programme informatique selon l'une quelconque des revendications 19 à 34, comprenant en outre :
un code informatique pour fournir une interface utilisateur pour établir le niveau de non-correspondance ;
un code informatique pour recevoir une entrée utilisateur du niveau de non-correspondance.

36. Produit de programme informatique selon l'une quelconque des revendications 19 à 35, comprenant en outre :
un code informatique pour fournir une interface utilisateur pour établir le niveau de refus ;
un code informatique pour recevoir une entrée utilisateur du niveau de refus.
